# EUROPEAN PATENT APPLICATION

(11) **EP 4 503 795 A1**
(43) Date of publication of application: **05.02.2025**
(21) Application number: 22934121.9
(22) Date of filing: 30.03.2022
(51) Int. Cl.: H04W 72/04, H04W 72/12

(54) **COMMUNICATION CONTROL METHOD AND APPARATUS, COMMUNICATION APPARATUS, AND STORAGE MEDIUM**

(71) Applicant: Beijing Xiaomi Mobile Software Co., Ltd., Beijing 100085 (CN)
(72) Inventor: ZHAO, Qun, Beijing 100085 (CN)
(74) Representative: Dehns Germany Partnerschaft mbB
(86) International application number: PCT/CN2022/084193
(87) International publication number: WO 2023/184270

(57) **Abstract**

The present disclosure relates to a communication control method and apparatus, a communication apparatus, and a storage medium. The communication control method includes: in response to a conflict between transmission of uplink information to a network device in an uplink subband and receiving of downlink information transmitted by the network device in a downlink slot where the uplink subband is located, transmitting the uplink information or receiving the downlink information according to predefined rules. According to the present disclosure, when the terminal determines that there is a conflict, the conflict can be resolved according to predefined rules, such as transmitting the uplink information on the UL subband, and not receiving the downlink information in the DL slot where the UL subband is located according to predefined rules; or not transmitting the uplink information on the UL subband and receiving the downlink information in the DL slot where the UL subband is located according to predefined rules, to ensure smooth communication.

## Description

### TECHNICAL FIELD

The present disclosure relates to the field of communication technology, and in particular to a communication control method and apparatus, a communication device, and a computer-readable storage medium.

### BACKGROUND

For a communication process between a terminal and a base station, in order to enable the terminal to support duplex communication, the base station can configure an uplink (UL) subband for uplink data transmission in a downlink (DL) slot for the terminal, and can schedule the uplink data transmission of the terminal within a time domain range corresponding to the UL subband. In the DL slot where the UL subband is located, the terminal can also perform downlink data receiving, thus enabling duplex communication.

However, in the DL slot, there can be various types of downlink transmissions. When a frequency domain resource occupied by a downlink transmission overlaps with the UL subband, there will be a conflict between the uplink transmission on the UL subband and the receiving of the downlink transmission by the terminal.

### SUMMARY

In view of this, the embodiments of the present disclosure propose a communication control method, a communication control apparatus, a communication device, and a computer-readable storage medium to solve technical problems in related arts.

According to the first aspect of the embodiments of the present disclosure, a communication control method performed by a terminal is proposed. The method includes: in response to a conflict between transmission of uplink information to a network device in an uplink subband and receiving of downlink information transmitted by the network device in a downlink slot where the uplink subband is located, transmitting the uplink information or receiving the downlink information according to predefined rules.

According to the second aspect of the embodiments of the present disclosure, a communication control method is proposed, performed by a network device. The method includes: in response to a conflict between receiving of uplink information transmitted by a terminal in an uplink subband and transmission of downlink information to the terminal in a downlink slot where the uplink subband is located, receiving the uplink information or transmitting the downlink information according to predefined rules.

According to the third aspect of the embodiments of the present disclosure, a communication control apparatus is proposed, and applied in a terminal. The apparatus includes: a communication module, configured to, in response to a conflict between transmission of uplink information to a network device in an uplink subband and receiving of downlink information transmitted by the network device in a downlink slot where the uplink subband is located, transmit the uplink information or receive the downlink information according to predefined rules.

According to the fourth aspect of the embodiments of the present disclosure, a communication control apparatus is proposed, applied in a network device. The apparatus includes: a communication module, configured to, in response to a conflict between receiving of uplink information transmitted by a terminal in an uplink subband and transmission of downlink information to the terminal in a downlink slot where the uplink subband is located, receive the uplink information or transmit the downlink information according to predefined rules.

According to the fifth aspect of the embodiments of the present disclosure, a communication device is proposed, including: one or more processors; and one or more memories for storing a computer program; where when the computer program is executed by the one or more processors, the communication control method performed by a terminal mentioned above is implemented.

According to the sixth aspect of the embodiments of the present disclosure, a communication device is proposed, including: one or more processors; and one or more memories for storing a computer program; where when the computer program is executed by the one or more processors, the communication control method performed by a network device mentioned above is implemented.

According to the seventh aspect of the embodiments of the present disclosure, a computer-readable storage medium is proposed, where when the computer program is executed by one or more processors, the communication control method performed by a terminal mentioned above is implemented.

According to the eighth aspect of the embodiments of the present disclosure, a computer-readable storage medium is proposed, where when the computer program is executed by one or more processors, the communication control method performed by a network device mentioned above is implemented.

According to the embodiments of the present disclosure, a method for resolving a conflict between transmission of uplink information to the network device in the UL subband of a DL slot and receiving of downlink information transmitted by the network device in the DL slot can be specified through predefined rules.

Based on this, when the terminal determines that there is a conflict, the conflict can be resolved according to predefined rules, such as transmitting the uplink information on the UL subband, and not receiving the downlink information in the DL slot where the UL subband is located according to predefined rules; or not transmitting the uplink information on the UL subband and receiving the downlink information in the DL slot where the UL subband is located according to predefined rules, to ensure smooth communication.

Correspondingly, when the network device determines that there is a conflict, the conflict can be resolved according to predefined rules, such as receiving the uplink information transmitted by the terminal on the UL subband, and not transmitting the downlink information to the terminal in the DL slot where the UL subband is located according to predefined rules; or not receiving the uplink information transmitted by the terminal on the UL subband, and transmitting the downlink information to the terminal in the DL slot where the UL subband is located according to predefined rules, to ensure smooth communication.

### BRIEF DESCRIPTION OF DRAWINGS

In order to more clearly illustrate the technical solutions according to the embodiments of the present disclosure, drawings that need to be used in the description of the embodiments will be briefly introduced below. The drawings in the following description only relate to some embodiments of the present disclosure. For those skilled in the art, other drawings can also be obtained according to these drawings without creative effort.
FIGs. 1A to 1C are schematic diagrams of uplink subbands according to embodiments of the present disclosure.
FIG. 2 is a schematic flowchart of a communication control method according to an embodiment of the present disclosure.
FIG. 3A is a schematic flowchart of another communication control method according to an embodiment of the present disclosure.
FIG. 3B is a schematic diagram of an uplink subband according to an embodiment of the present disclosure.
FIG. 3C is a schematic diagram of resolving a conflict according to an embodiment of the present disclosure.
FIG. 4 is a schematic flowchart of another communication control method according to an embodiment of the present disclosure.
FIG. 5 is a schematic flowchart of another communication control method according to an embodiment of the present disclosure.
FIG. 6 is a schematic flowchart of another communication control method according to an embodiment of the present disclosure.
FIG. 7 is a schematic flowchart of another communication control method according to an embodiment of the present disclosure.
FIG. 8 is a schematic flowchart of another communication control method according to an embodiment of the present disclosure.
FIG. 9A is a schematic diagram of another uplink subband according to an embodiment of the present disclosure.
FIG. 9B is a schematic diagram of resolving a conflict according to an embodiment of the present disclosure.
FIG. 10 is a schematic flowchart of a communication control method according to an embodiment of the present disclosure.
FIG. 11 is a schematic flowchart of another communication control method according to an embodiment of the present disclosure.
FIG. 12 is a schematic flowchart of another communication control method according to an embodiment of the present disclosure.
FIG. 13 is a schematic flowchart of another communication control method according to an embodiment of the present disclosure.
FIG. 14 is a schematic flowchart of another communication control method according to an embodiment of the present disclosure.
FIG. 15 is a schematic flowchart of another communication control method according to an embodiment of the present disclosure.
FIG. 16 is a schematic flowchart of another communication control method according to an embodiment of the present disclosure.
FIG. 17 is a schematic block diagram of a communication control apparatus according to an embodiment of the present disclosure.
FIG. 18 is a schematic block diagram of a communication control apparatus according to an embodiment of the present disclosure.
FIG. 19 is a schematic block diagram of a device for communication control according to an embodiment of the present disclosure.
FIG. 20 is a schematic block diagram of a device for communication control according to an embodiment of the present disclosure.

### DETAILED DESCRIPTION

The technical solutions in the embodiments of the present disclosure are clearly described below with reference to the accompanying drawings in the embodiments of the present disclosure. The embodiments described are merely some embodiments of the present disclosure, and not all embodiments. Other embodiments achieved by those skilled in the art according to the embodiments in the present disclosure without paying creative work shall all fall within the scope of protection of the present disclosure.

The term used in the embodiments of the present disclosure is for the purpose of describing particular examples only and is not intended to limit the embodiments of the present disclosure. As used in embodiments of the present disclosure and the appended claims, the singular forms "a", "an" and "the" are intended to include the plural forms as well, unless the context clearly indicates otherwise. It should further be understood that the term "and/or" as used herein refers to and includes any and all possible combinations of one or more of the associated listed items.

It shall be understood that, although the terms "first," "second," "third," and the like may be used herein to describe various information, the information should not be limited by these terms. These terms are only used to distinguish the same type of information from each other. For example, without departing from the scope of the present disclosure, first information may be referred as second information; and similarly, second information may also be referred as first information. Depending on the context, the word "if" as used herein can be interpreted as "upon", "when" or "in response to determining".

For the purpose of simplicity and ease of understanding, the terms used in the present disclosure to represent comparison are "greater than", "less than", "higher than" or "lower than". But for those skilled in the art, it can be understood that the term "greater than" also encompasses the meaning of "greater than or equal to", "less than" also encompasses the meaning of "less than or equal to", "higher than" encompasses the meaning of "higher than or equal to", and "lower than" also encompasses the meaning of "lower than or equal to".

The embodiments of the present disclosure propose a communication control method. The communication control method shown in the embodiment can be performed by a terminal. The terminal includes but not limited to a mobile phone, a tablet, a wearable device, a sensor, an IoT device (such as Narrow Band Internet of Thing, abbreviated as NB loT, Machine Type Communication, abbreviated as MTC, or Enhanced Machine Type Communication, abbreviated as eMTC), or other communication devices. The terminal can communicate with a network device. The network device includes but not limited to a network device (such as a base station, a core network, etc.) in a communication system such as a 4G communication system, a 5G communication system, or a 6G communication system, etc.

In an embodiment, duplex communication can be performed between the terminal and the network device, such as full duplex communication or half duplex communication.

The Network device can configure a downlink (DL) slot for the terminal, and the frequency domain resource corresponding to the DL slot can include a frequency band, or one or more bandwidth parts (BWPs) within a frequency band. The terminal can also be configured with an uplink (UL) subband for uplink transmission in the downlink slot, such that in the frequency domain resource corresponding to the DL slot, the terminal can perform uplink transmission on the UL subband, and perform downlink receiving on a frequency domain resource outside the UL subband, thereby achieving full duplex communication.

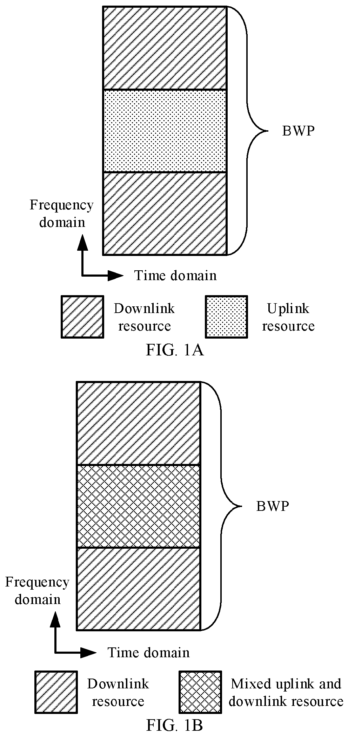

FIGs. 1A to 1C are schematic diagrams of uplink subbands according to embodiments of the present disclosure.

Taking the frequency domain resource corresponding to the DL slot including a BWP as an example.

In an embodiment, as shown in FIG. 1A, in the DL slot, the frequency domain resource corresponding to the UL subband does not overlap with the frequency domain resources for downlink receiving.

In an embodiment, as shown in FIG. 1B, in the DL slot, the frequency domain resource corresponding to the UL subband completely overlaps with the frequency domain resource for downlink receiving.

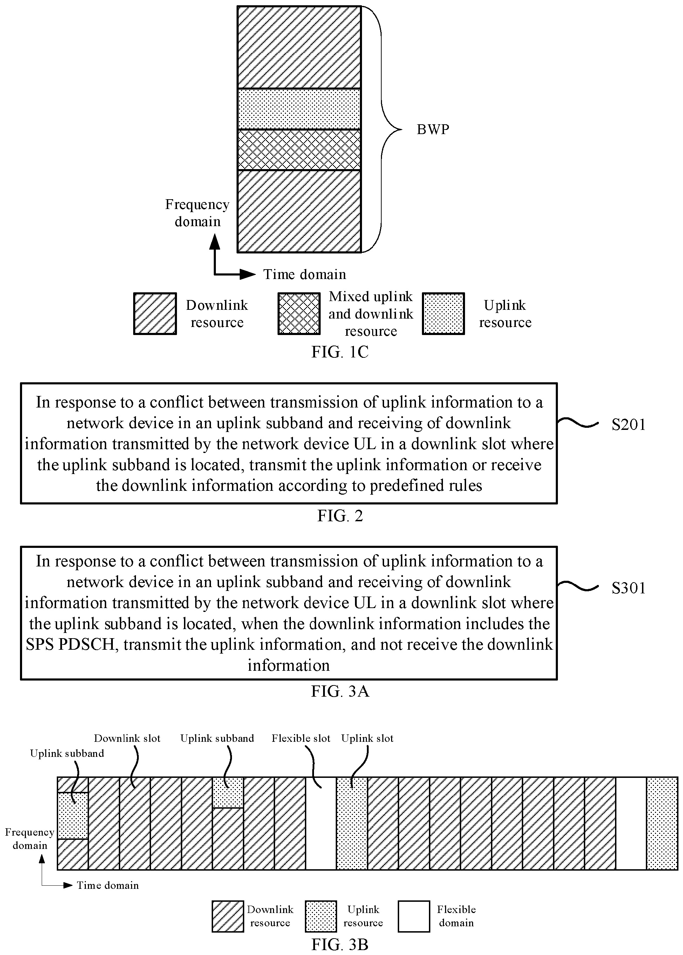

In an embodiment, as shown in FIG. 1C, in the DL slot, the frequency domain resource corresponding to the UL subband partially overlaps with the frequency domain resource for downlink receiving.

The following embodiments are mainly illustrated in the case of UL subband shown in FIG. 1A.

FIG. 2 is a schematic flowchart of a communication control method according to an embodiment of the present disclosure.

As shown in FIG. 2, the communication control method may include the following step S201.

In step S201, in response to a conflict between transmission of uplink information to a network device in an uplink subband and receiving of downlink information transmitted by the network device UL in a downlink slot where the uplink subband is located, the uplink information is transmitted or the downlink information is received according to predefined rules.

In an embodiment, the terminal can transmit downlink information to the network device in the UL subband of the DL slot, and the network device can transmit downlink information to the terminal in the DL slot. When the frequency domain resource occupied by the downlink information overlaps (partially or fully) with the UL subband, the terminal transmitting uplink information to the network device in the UL subband conflicts with the terminal receiving downlink information from the network device in the DL slot.

In an embodiment, the uplink information transmitted by the terminal to the network device in the UL subband includes but is not limited to a PUCCH (Physical Uplink Control Channel), a PUSCH (Physical Uplink Shared Channel), or an SRS (Sounding Reference Signal), etc.

In an embodiment, the downlink information transmitted by the network device to the terminal in the downlink slot includes at least one of:
a semi-persistent scheduling physical downlink shared channel (SPS PDSCH);
a periodic and/or semi-persistent non zero power channel state information reference signal (NZP CSI RS);
a periodic and/or semi-persistent zero power channel state information reference signal (ZP CSI RS);
a control resource set (CORESET);
a search space (SS); or
a PDSCH scheduled by the network device.

The search space includes but is not limited to a Common Search Space (CSS) and a User Equipment Specific Search Space (USS). The CSS can further include CSSs of various types, such as Type0, Type0a, Type0b, Type1, Type2, Type3, and so on.

According to the embodiments of the present disclosure, a method for resolving a conflict between transmission of uplink information to the network device in the UL subband of a DL slot and receiving of downlink information transmitted by the network device in the DL slot can be specified through predefined rules (such as protocol agreements). Based on this, when the terminal determines that there is a conflict, the conflict can be resolved according to predefined rules, such as transmitting the uplink information on the UL subband, and not receiving the downlink information in the DL slot where the UL subband is located according to predefined rules; or not transmitting the uplink information on the UL subband and receiving the downlink information in the DL slot where the UL subband is located according to predefined rules, to ensure smooth communication.

For example, predefined rules can stipulate that when there is a conflict, the terminal resolves the conflict by transmitting uplink information and not receiving downlink information. So when the terminal determines that there is a conflict, it can transmit the uplink information on the UL subband and not receive the downlink information in the DL slot where the UL subband is located.

For example, predefined rules can stipulate that when there is a conflict, the terminal resolves the conflict by receiving downlink information and not transmitting uplink information. So when the terminal determines that there is a conflict, the terminal cannot transmit the uplink information on the UL subband and can receive the downlink information in the DL slot where the UL subband is located.

The predefined rules can also specify a correspondence between the type of downlink information and the method of the terminal resolving a conflict when there is the conflict. The following embodiments illustrate the correspondence between the types of downlink information and conflict resolution methods.

In addition, it should be noted that the content specified by the predefined rules in all embodiments of the present disclosure can also be indicated to the terminal by the network device through indication information, and the method of resolving the conflict can be adjusted according to the actual situation.

FIG. 3A is a schematic flowchart of another communication control method according to an embodiment of the present disclosure. As shown in FIG. 3A, transmitting the uplink information or receiving the downlink information according to the predefined rules includes step S301.

In step S301, when the downlink information includes the SPS PDSCH, the uplink information is transmitted, and the downlink information is not received.

In an embodiment, predefined rules may stipulate that when there is a conflict and the downlink information includes an SPS PDSCH, the terminal resolves the conflict by transmitting uplink information and not receiving downlink information. So, the terminal can, when determining that there is a conflict and determining that the downlink information includes an SPS PDSCH, transmit uplink information on the UL subband, and not receive the SPS PDSCH transmitted by the network device in the DL slot where the UL subband is located.

Correspondingly, the network device can, when determining that there is a conflict and determining that the downlink information includes the SPS PDSCH, receive uplink information transmitted by the terminal on the UL subband and not transmit the SPS PDSCH to the terminal in the DL slot where the UL subband is located according to predefined rules.

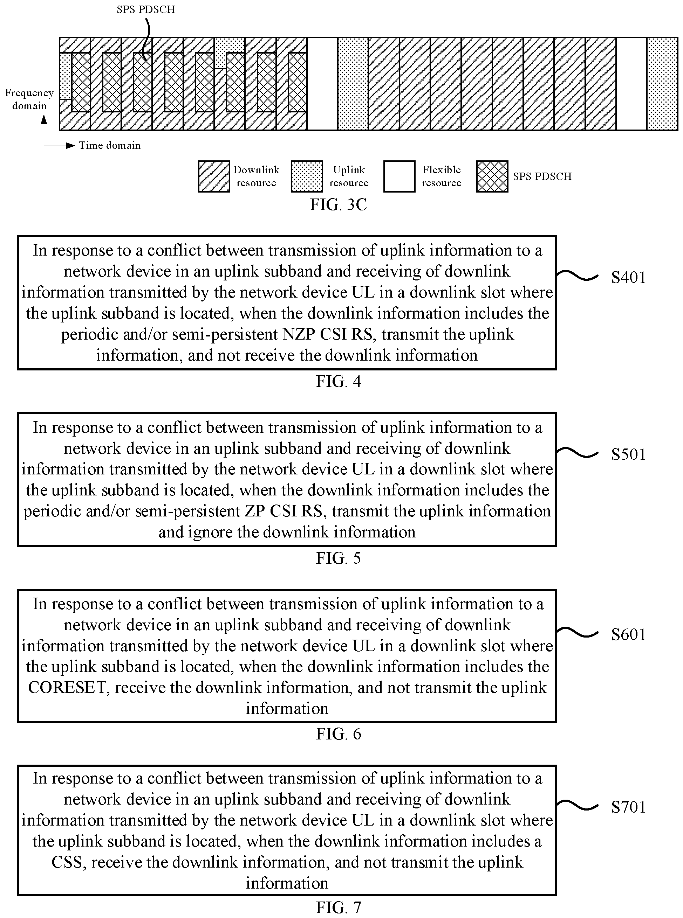

FIG. 3B is a schematic diagram of an uplink subband according to an embodiment of the present disclosure. FIG. 3C is a schematic diagram of resolving conflict according to an embodiment of the present disclosure.

As shown in FIG. 3B, for example, a Time Division Duplexing (TDD) UL-DL configuration is DDDDDDDDSU, where D represents a downlink slot, S represents a flexible slot, and U represents an uplink slot. That is, in a subframe (or UL-DL configuration cycle) consisting of 10 slots, the first 8 slots are downlink slots, the 9th slot is a flexible slot, and the 10th slot is an uplink slot. The network device configures UL subbands for the terminal in the first and sixth slots.

As shown in FIG. 3C, when the network device configures an SPS PDSCH for the terminal, if the SPS PDSCH is triggered and PDSCH aggregation is enabled, with an aggregation level of 8, each SPS PDSCH needs to be transmitted continuously on 8 DL slots, i.e., one transmission on each DL slot, for a total of 8 transmissions. So in the above subframe, it can be transmitted in the first 8 DL slots.

When the terminal needs to transmit uplink information on the UL subband, there is conflict between the SPS PDSCHs under downlink transmission and the uplink information transmitted by the terminal in the first and sixth slots. In this case, the terminal can transmit uplink information on the UL subbands in the first and sixth slots according to predefined rules, without receiving SPS PDSCHs.

Since the predefined rules are not only known to the terminal, but also to the network device, the network device can receive the uplink information transmitted by the terminal on the UL subbands in the first and sixth slots according to the predefined rules, without transmitting SPS PDSCHs to the terminal.

FIG. 4 is a schematic flowchart of another communication control method according to an embodiment of the present disclosure. As shown in FIG. 4, transmitting the uplink information or receiving the downlink information according to the predefined rules includes step S401.

In step S401, when the downlink information includes the periodic and/or semi-persistent NZP CSI RS, the uplink information is transmitted, and the downlink information is not received.

In an embodiment, predefined rules may stipulate that when there is a conflict and the downlink information includes a Periodic and/or Semi-persistent NZP CSI RS, the terminal resolves the conflict by transmitting uplink information and not receiving downlink information. So the terminal can, when determining that there is a conflict and determining that the downlink information includes a Periodic and/or Semi-persistent NZP CSI RS, transmit uplink information on the UL subband, and not receive the Periodic and/or Semi-persistent NZP CSI RS transmitted by the network device in the DL slot where the UL subband is located.

Correspondingly, the network device can, when determining that there is a conflict and determining that the downlink information includes the Periodic and/or Semi-persistent NZP CSI RS, receive uplink information transmitted by the terminal on the UL subband, and not transmit the Periodic and/or Semi-persistent NZP CSI RS to the terminal in the DL slot where the UL subband is located according to predefined rules.

FIG. 5 is a schematic flowchart of another communication control method according to an embodiment of the present disclosure. As shown in FIG. 5, transmitting the uplink information or receiving the downlink information according to the predefined rules includes step S501.

In step S501, when the downlink information includes the periodic and/or semi-persistent ZP CSI RS, the uplink information is transmitted and the downlink information is ignored.

In an embodiment, since ZP CSI RS is generally used for rate matching (RM), the terminal does not receive or ignore downlink information containing the ZP CSI RS, but uses the ZP CSI RS for rate matching or ignores the ZP CSI RS.

So, predefined rules may stipulate that when there is a conflict and the downlink information includes a Periodic and/or Semi-persistent ZP CSI RS, the terminal resolves the conflict by transmitting uplink information and ignoring downlink information. So the terminal can, when determining that there is a conflict and determining that the downlink information includes a Periodic and/or Semi-persistent ZP CSI RS, transmit uplink information on the UL subband, and ignore the Periodic and/or Semi-persistent ZP CSI RS in the DL slot where the UL subband is located.

Correspondingly, the network device can, when determining that there is a conflict and determining that the downlink information includes the Periodic and/or Semi-persistent ZP CSI RS, receive uplink information transmitted by the terminal on the UL subband, and ignore the Periodic and/or Semi-persistent ZP CSI RS in the DL slot where the UL subband is located according to predefined rules.

FIG. 6 is a schematic flowchart of another communication control method according to an embodiment of the present disclosure. As shown in FIG. 6, transmitting the uplink information or receiving the downlink information according to the predefined rules includes step S601.

In step S601, when the downlink information includes the CORESET, the downlink information is received, and the uplink information is not transmitted.

In an embodiment, predefined rules may stipulate that when there is a conflict and the downlink information includes a CORESET, the terminal resolves the conflict by not transmitting uplink information and receiving downlink information. So the terminal can, when determining that there is a conflict and determining that the downlink information includes a CORESET, not transmit the uplink information on the UL subband, and receive the CORESET transmitted by the network device in the DL slot where the UL subband is located.

Correspondingly, the network device can, when determining that there is a conflict and determining that the downlink information includes the CORESET, not receive uplink information transmitted by the terminal on the UL subband and transmit the CORESET to the terminal in the DL slot where the UL subband is located according to predefined rules.

FIG. 7 is a schematic flowchart of another communication control method according to an embodiment of the present disclosure. As shown in FIG. 7, transmitting the uplink information or receiving the downlink information according to the predefined rules includes step S701.

In step S701, when the downlink information includes a common search space (CSS), the downlink information is received, and the uplink information is not transmitted.

In an embodiment, predefined rules may stipulate that when there is a conflict and the downlink information includes a CSS, the terminal resolves the conflict by not transmitting uplink information and receiving downlink information. So the terminal can, when determining that there is a conflict and determining that the downlink information includes a CSS, not transmit the uplink information on the UL subband, and receive the CSS transmitted by the network device in the DL slot where the UL subband is located.

Correspondingly, the network device can, when determining that there is a conflict and determining that the downlink information includes the CSS, not receive uplink information transmitted by the terminal on the UL subband and transmit the CSS to the terminal in the DL slot where the UL subband is located according to predefined rules.

Taking the CSS as an example, predefined rules can stipulate that when there is a conflict and the downlink information includes at least one of a CSS of Type0, a CSS of Type0a, a CSS of Type0b, a CSS of Type1, or a CSS of Type2, the terminal resolves the conflict by not transmitting uplink information and receiving downlink information. So the terminal can, when determining that there is a conflict and determining that the downlink information includes at least one of a CSS of Type0, a CSS of Type0a, a CSS of Type0b, a CSS of Type 1, or a CSS of Type2, not transmit the uplink information, and receive the downlink information.

The predefined rules may stipulate that when there is a conflict and the downlink information includes a CSS of Type3, the terminal resolves the conflict by not transmitting uplink information and receiving downlink information. So the terminal can, when determining that there is a conflict and determining that the downlink information includes the CSS of Type3, not transmit uplink information and receive downlink information.

In an embodiment, transmitting the uplink information or receiving the downlink information according to the predefined rules includes: when the downlink information includes a user equipment specific search space (USS), not receiving the downlink information, and transmitting the uplink information.

The predefined rules may stipulate that when there is a conflict and the downlink information includes a USS, the terminal resolves the conflict by transmitting uplink information and not receiving downlink information. So the terminal can, when determining that there is a conflict and determining that the downlink information includes a USS, transmit the uplink information on the UL subband, and not receive the USS transmitted by the network device in the DL slot where the UL subband is located.

Correspondingly, the network device can, when determining that there is a conflict and determining that the downlink information includes the USS, receive uplink information transmitted by the terminal on the UL subband, and not transmit the USS to the terminal in the DL slot where the UL subband is located according to predefined rules.

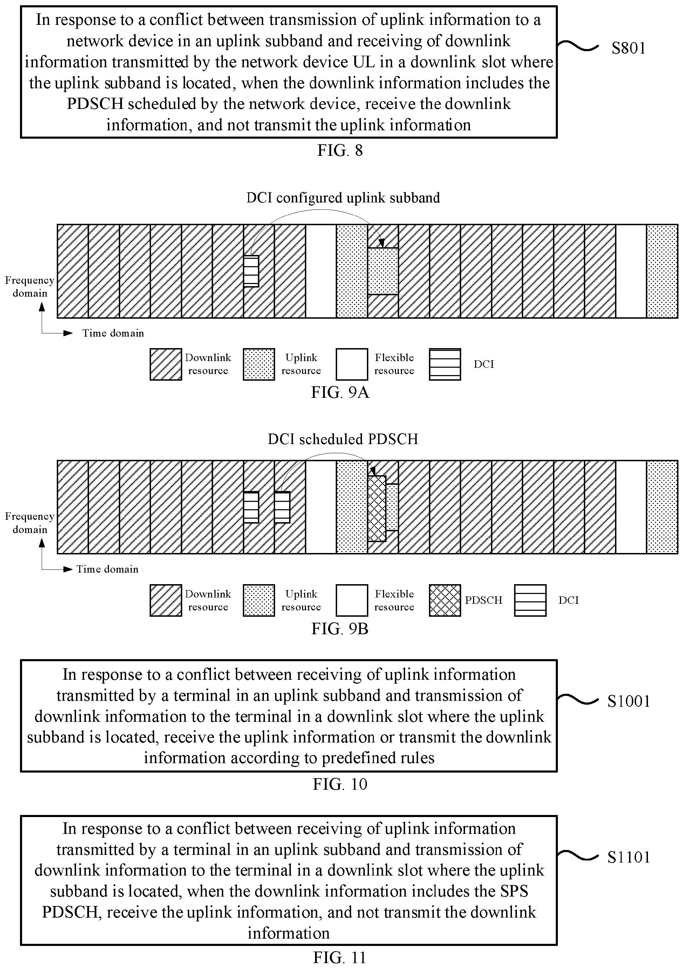

FIG. 8 is a schematic flowchart of another communication control method according to an embodiment of the present disclosure. As shown in FIG. 8, transmitting the uplink information or receiving the downlink information according to the predefined rules includes step S801.

In step S801, when the downlink information includes the PDSCH scheduled by the network device, the downlink information is received, and the uplink information is not transmitted.

In an embodiment, predefined rules may stipulate that when there is a conflict and the downlink information includes a PDSCH scheduled by the network device, the terminal resolves the conflict by not transmitting uplink information and receiving downlink information. So the terminal can, when determining that there is a conflict and determining that the downlink information includes the PDSCH scheduled by the network device, not transmit uplink information and receive downlink information.

Correspondingly, the network device can, when determining that there is a conflict and determining that the downlink information includes PDSCH scheduled by the network device, not receive uplink information transmitted by the terminal and transmit downlink information to the terminal according to predefined rules.

Since the resources (such as the DL slot where the UL subband is located and the UL subband) used by the terminal to transmit uplink information and the PDSCH scheduled by the network device are configured by the network device, the network device can avoid the conflict between the uplink information transmitted by the terminal on the UL subband and the PDSCH scheduled by the network device by adjusting the configuration. However, in some cases, the PDSCH scheduled by the network device may still conflict with the uplink information transmitted by the terminal on the UL subband.

FIG. 9A is a schematic diagram of another uplink subband according to an embodiment of the present disclosure. FIG. 9B is a schematic diagram of resolving a conflict according to an embodiment of the present disclosure.

As shown in FIG. 9A, for two adjacent subframes, for example, if the subframe structure is DDDDDDDDSU, the network device configures the UL subband for the terminal in the seventh DL slot of the first subframe through Down Control Information (DCI).

As shown in FIG. 9B, the network device determines that there is service data with a short latency requirement (such as the latency lower than the preset latency) that need to be transmitted to the terminal. For example, there is a URLLC (Ultra Reliable and Low Latency Communication) PDSCH that needs to be transmitted to the terminal. In order to ensure that the terminal can receive the URLLC PDSCH as soon as possible, the network device schedules the URLLC PDSCH through DCI in the eighth DL slot of the first subframe, to enable the URLLC PDSCH to be transmitted in the first DL slot in the second subframe.

In this case, there is a conflict between the PDSCH scheduled by the network device and the uplink information transmitted by the terminal on the UL subband. According to this embodiment, the terminal cannot transmit uplink information on the UL subband, and can receive the PDSCH scheduled by the network device. Correspondingly, according to predefined rules, the network device cannot receive uplink information transmitted by the terminal on the UL subband, and can transmit the PDSCH scheduled by the network device to the terminal.

FIG. 10 is a schematic flowchart of a communication control method according to an embodiment of the present disclosure. The communication control method shown in this embodiment can be performed by a network device that can communicate with a terminal. The network device includes but is not limited to a base station in a communication system such as a 4G base station, a 5G base station, or a 6G base station, etc. The terminal includes but is not limited to a communication device such as a mobile phone, a tablet, a wearable device, a sensor, or an Internet of Things (IoT) device (such as NB loT, MTC, eMTC).

In an embodiment, duplex communication can be performed between the terminal and the network device, such as full duplex communication or half duplex communication.

The Network device can configure a downlink (DL) slot for the terminal, and the frequency domain resource corresponding to the DL slot can include a frequency band, or one or more bandwidth parts (BWPs) within a frequency band. The terminal can also be configured with an uplink (UL) subband for uplink transmission in the downlink slot, such that in the frequency domain resource corresponding to the DL slot, the terminal can perform uplink transmission on the UL subband, and perform downlink receiving on a frequency domain resource outside the UL subband, thereby achieving full duplex communication.

As shown in FIG. 10, the communication control method may include the following step S1001.

In step S1001, in response to a conflict between receiving of uplink information transmitted by a terminal in an uplink subband and transmission of downlink information to the terminal in a downlink slot where the uplink subband is located, the uplink information is received or the downlink information is transmitted according to predefined rules.

In an embodiment, the terminal can transmit downlink information to the network device in the UL subband of the DL slot, and the network device can transmit downlink information to the terminal in the DL slot. When the frequency domain resource occupied by the downlink information overlaps (partially or fully) with the UL subband, the terminal transmitting uplink information to the network device in the UL subband conflicts with the terminal receiving downlink information from the network device in the DL slot.

In an embodiment, the uplink information transmitted by the terminal to the network device in the UL subband includes but is not limited to a PUCCH, a PUSCH, or an SRS, etc.

In an embodiment, the downlink information transmitted by the network device to the terminal in the downlink slot includes at least one of:
a semi-persistent scheduling physical downlink shared channel (SPS PDSCH);
a periodic and/or semi-persistent non zero power state information reference signal (NZP CSI RS);
a periodic and/or semi-persistent zero power channel state information reference signal (ZP CSI RS);
a control resource set (CORESET);
a search space (SS); or
a PDSCH scheduled by the network device.

The search space includes but is not limited to a Common Search Space (CSS) and a User Equipment specific Search Space (USS). The CSS can further include CSSs of various types, such as Type0, Type0a, Type0b, Type 1, Type2, Type3, and so on.

According to the embodiments of the present disclosure, a method for resolving a conflict between transmission of uplink information to the network device in the UL subband of a DL slot and receiving of downlink information transmitted by the network device in the DL slot can be specified through predefined rules (such as protocol agreements). Based on this, when the network device determines that there is a conflict, the conflict can be resolved according to predefined rules, such as receiving the uplink information transmitted by the terminal on the UL subband, and not transmitting the downlink information to the terminal in the DL slot where the UL subband is located according to predefined rules; or not receiving the uplink information transmitted by the terminal on the UL subband, and transmitting the downlink information to the terminal in the DL slot where the UL subband is located according to predefined rules, to ensure smooth communication.

For example, predefined rules can stipulate that when there is a conflict, the network device resolves the conflict by receiving uplink information and not transmitting downlink information. So when the network device can, when determining that there is a conflict, receive uplink information transmitted by the terminal on the UL subband, and not transmit the downlink information to the terminal in the DL slot where the UL subband is located.

For example, predefined rules can stipulate that when there is a conflict, the network device resolves the conflict by transmitting downlink information and not receiving uplink information. So when the network device determines that there is a conflict, the terminal device cannot receive the uplink information transmitted by the terminal on the UL subband, and can transmit the downlink information to the terminal in the DL slot where the UL subband is located, to ensure smooth communication.

The predefined rules can also specify a correspondence between the type of downlink information and the method of the network device resolving a conflict when there is the conflict. The following embodiments illustrate the correspondence between the types of downlink information and conflict resolution methods.

FIG. 11 is a schematic flowchart of another communication control method according to an embodiment of the present disclosure. As shown in FIG. 11, receiving the uplink information or transmitting the downlink information according to the predefined rules includes step S1101.

In step S1101, when the downlink information includes the SPS PDSCH, the uplink information is received, and the downlink information is not transmitted.

In an embodiment, predefined rules may stipulate that when there is a conflict and the downlink information includes SPS PDSCH, the network device resolves the conflict by receiving the uplink information transmitted by the terminal and not transmitting the downlink information to the terminal. So, the network device can, when determining that there is a conflict and determining that the downlink information includes the SPS PDSCH, receive uplink information transmitted by the terminal on the UL subband and not transmit the SPS PDSCH to the terminal in the DL slot where the UL subband is located.

Correspondingly, the terminal can, when determining that there is a conflict and determining that the downlink information includes the SPS PDSCH, transmit uplink information on the UL subband, and not receive the SPS PDSCH transmitted by the network device in the DL slot where the UL subband is located, according to predefined rules.

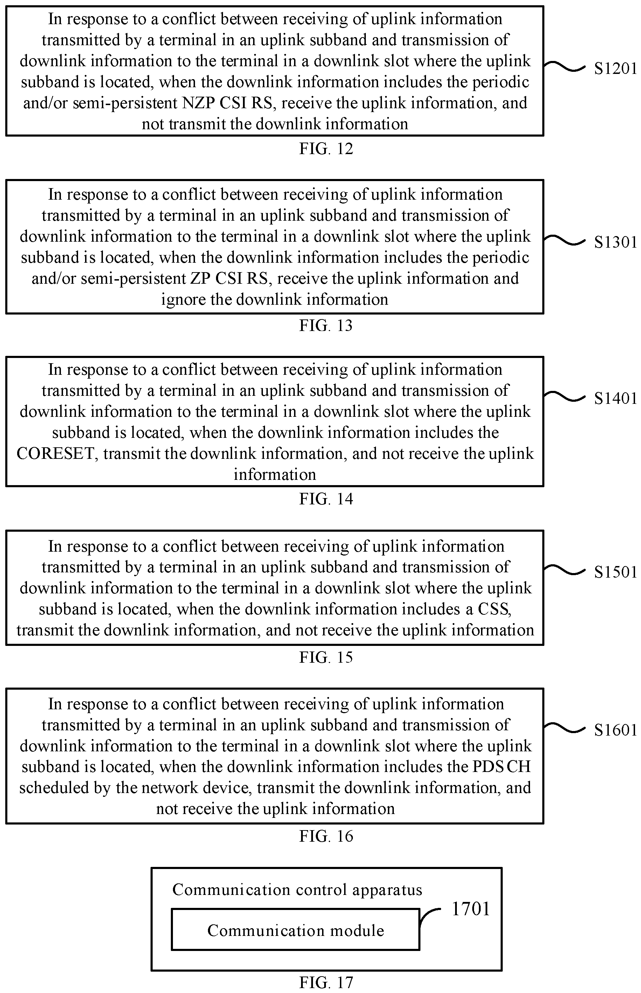

FIG. 12 is a schematic flowchart of another communication control method according to an embodiment of the present disclosure. As shown in FIG. 12, transmitting the uplink information or receiving the downlink information according to the predefined rules includes step S1201.

In step S1201, when the downlink information includes the periodic and/or semi-persistent NZP CSI RS, the uplink information is received, and the downlink information is not transmitted.

In an embodiment, predefined rules may stipulate that when there is a conflict and the downlink information includes Periodic and/or Semi-persistent NZP CSI RS, the network device resolves the conflict by receiving the uplink information transmitted by the terminal and not transmitting the downlink information to the terminal. So, the network device can, when determining that there is a conflict and determining that the downlink information includes the Periodic and/or Semi-persistent NZP CSI RS, receive uplink information transmitted by the terminal on the UL subband, and not transmit the Periodic and/or Semi-persistent NZP CSI RS to the terminal in the DL slot where the UL subband is located.

Correspondingly, the terminal can, when determining that there is a conflict and determining that the downlink information includes a Periodic and/or Semi-persistent NZP CSI RS, transmit uplink information on the UL subband, and not receive the Periodic and/or Semi-persistent NZP CSI RS transmitted by the network device in the DL slot where the UL subband is located according to the predefined rules.

FIG. 13 is a schematic flowchart of another communication control method according to an embodiment of the present disclosure. As shown in FIG. 13, transmitting the uplink information or receiving the downlink information according to the predefined rules includes step S1301.

In step S1301, when the downlink information includes the periodic and/or semi-persistent ZP CSI RS, the uplink information is received and the downlink information is ignored.

In an embodiment, predefined rules may stipulate that when there is a conflict and the downlink information includes Periodic and/or Semi-persistent ZP CSI RS, the network device resolves the conflict by receiving the uplink information transmitted by the terminal and ignoring the downlink information. So the network device can, when determining that there is a conflict and determining that the downlink information includes a Periodic and/or Semi-persistent ZP CSI RS, receive uplink information transmitted by the terminal on the UL subband, and ignore the Periodic and/or Semi-persistent ZP CSI RS in the DL slot where the UL subband is located.

Correspondingly, the terninal can, when determining that there is a conflict and determining that the downlink information includes Periodic and/or Semi-persistent ZP CSI RS, transmit the uplink information on the UL subband, ignoring the Periodic and/or Semi-persistent ZP CSI RS in the DL slot where the UL subband is located according to predefined rules.

FIG. 14 is a schematic flowchart of another communication control method according to an embodiment of the present disclosure. As shown in FIG. 14, transmitting the uplink information or receiving the downlink information according to the predefined rules includes step S1401.

In step S1401, when the downlink information includes the CORESET, the downlink information is transmitted, and the uplink information is not received.

In an embodiment, predefined rules may stipulate that when there is a conflict and the downlink information includes CORESET, the network device resolves the conflict by not receiving the uplink information transmitted by the terminal and transmitting the downlink information to the terminal. So, the network device can, when determining that there is a conflict and determining that the downlink information includes the CORESET, not receive uplink information transmitted by the terminal on the UL subband and transmit the CORESET to the terminal in the DL slot where the UL subband is located.

Correspondingly, the terminal can, when determining that there is a conflict and determining that the downlink information includes a CORESET, not transmit the uplink information on the UL subband, and receive the CORESET transmitted by the network device in the DL slot where the UL subband is located, according to predefined rules.

FIG. 15 is a schematic flowchart of another communication control method according to an embodiment of the present disclosure. As shown in FIG. 15, transmitting the uplink information or receiving the downlink information according to the predefined rules includes step S1501.

In step S1501, when the downlink information includes a common search space (CSS), the downlink information is transmitted, and the uplink information is not received.

In an embodiment, predefined rules may stipulate that when there is a conflict and the downlink information includes a CSS, the network device resolves the conflict by not receiving the uplink information transmitted by the terminal and transmitting the downlink information to the terminal. So, the network device can, when determining that there is a conflict and determining that the downlink information includes the CSS, not receive uplink information transmitted by the terminal on the UL subband and transmit the CSS to the terminal in the DL slot where the UL subband is located.

Correspondingly, the terminal can, when determining that there is a conflict and determining that the downlink information includes a CSS, not transmit the uplink information on the UL subband, and receive the CSS transmitted by the network device in the DL slot where the UL subband is located, according to predefined rules.

Taking the CSS as an example, predefined rules can stipulate that when there is a conflict and the downlink information includes at least one of a CSS of Type0, a CSS of Type0a, a CSS of Type0b, a CSS of Type1, or a CSS of Type2, the network device resolves the conflict by not receiving uplink information and transmitting downlink information. So, the network device can, when determining that there is a conflict and determining that the downlink information includes at least one of a CSS of Type0, a CSS of Type0a, a CSS of Type0b, a CSS of Type1, or a CSS of Type2, not receive uplink information transmitted by the terminal on the UL subband and transmit the CSS to the terminal in the DL slot where the UL subband is located.

Predefined rules may stipulate that when there is a conflict and the downlink information includes a CSS of Type3, the terminal resolves the conflict by not transmitting uplink information and receiving downlink information. So, the network device can, when determining that there is a conflict and determining that the downlink information includes the CSS of Type3, not receive uplink information transmitted by the terminal on the UL subband and transmit the CSS to the terminal in the DL slot where the UL subband is located.

In an embodiment, transmitting the uplink information or receiving the downlink information according to the predefined rules includes: when the downlink information includes a user equipment specific search space (USS), not transmitting the downlink information, and receiving the uplink information.

Predefined rules may stipulate that when there is a conflict and the downlink information includes a USS, the network device resolves the conflict by receiving the uplink information transmitted by the terminal and not transmitting the downlink information to the terminal. So, the network device can, when determining that there is a conflict and determining that the downlink information includes the USS, receive uplink information transmitted by the terminal on the UL subband, and not transmit the USS to the terminal in the DL slot where the UL subband is located.

Correspondingly, the terminal can, when determining that there is a conflict and determining that the downlink information includes a USS, transmit the uplink information on the UL subband, and not receive the USS transmitted by the network device in the DL slot where not in the UL subband is located, according to predefined rules.

FIG. 16 is a schematic flowchart of another communication control method according to an embodiment of the present disclosure. As shown in FIG. 16, transmitting the uplink information or receiving the downlink information according to the predefined rules includes step S1601.

In step S1601, when the downlink information includes the PDSCH scheduled by the network device, the downlink information is transmitted, and the uplink information is not received.

In an embodiment, predefined rules may stipulate that when there is a conflict and the downlink information includes a PDSCH scheduled by the network device, the network device resolves the conflict by not receiving the uplink information transmitted by the terminal and transmitting the downlink information to the terminal. So, the network device can, when determining that there is a conflict and determining that the downlink information includes the PDSCH scheduled by the network device, not receive uplink information transmitted by the terminal on not in the UL subband, and transmit the PDSCH scheduled by the network device to the terminal in the DL slot where the UL subband is located.

Correspondingly, the terminal can, when determining that there is a conflict and determining that the downlink information includes a PDSCH scheduled by the network device, not transmit the uplink information on the UL subband, and receive the PDSCH scheduled by the network device transmitted by the network device in the DL slot where the UL subband is located, according to predefined rules.

Corresponding to the embodiments of the communication control methods described above, the present disclosure further provides embodiments of communication control apparatuses.

The embodiment of the present disclosure proposes a communication control apparatus. The communication control apparatus shown in the embodiments can be applied to a terminal. The terminal includes but is not limited to a communication device such as a mobile phone, a tablet, a wearable device, a sensor, or an Internet of Things (IoT) device. The terminal can communicate with a network device. The network device includes but not limited to a network device (such as a base station, a core network, etc.) in a communication system such as a 4G communication system, a 5G communication system, or a 6G communication system, etc.

In an embodiment, duplex communication can be performed between the terminal and the network device, such as full duplex communication or half duplex communication.

The Network device can configure a downlink (DL) slot for the terminal, and the frequency domain resource corresponding to the DL slot can include a frequency band, or one or more bandwidth parts (BWPs) within a frequency band. The terminal can also be configured with an uplink (UL) subband for uplink transmission in the downlink slot, such that in the frequency domain resource corresponding to the DL slot, the terminal can perform uplink transmission on the UL subband, and perform downlink receiving on a frequency domain resource outside the UL subband, thereby achieving full duplex communication.

FIG. 17 is a schematic block diagram of a communication control apparatus according to an embodiment of the present disclosure.

As shown in FIG. 17, the communication control apparatus may include:
a communication module 1701, configured to, in response to a conflict between transmission of uplink information to a network device in an uplink subband and receiving of downlink information transmitted by the network device in a downlink slot where the uplink subband is located, transmit the uplink information or receive the downlink information according to predefined rules.

In an embodiment, the downlink information includes at least one of:
a semi-persistent scheduling physical downlink shared channel (SPS PDSCH);
a periodic and/or semi-persistent non zero power channel state information reference signal (NZP CSI RS);
a periodic and/or semi-persistent zero power channel state information reference signal (ZP CSI RS);
a control resource set (CORESET);
a search space (SS); or
a PDSCH scheduled by the network device.

In an embodiment, the communication module is configured to, when the downlink information includes the SPS PDSCH, transmit the uplink information, and not receive the downlink information.

In an embodiment, the communication module is configured to, when the downlink information includes the periodic and/or semi-persistentNZP CSI RS, transmit the uplink information, and not receive the downlink information.

In an embodiment, the communication module is configured to, when the downlink information includes the periodic and/or semi-persistent ZP CSI RS, transmit the uplink information and ignore the downlink information.

In an embodiment, the communication module is configured to, when the downlink information includes the CORESET, receive the downlink information, and not transmit the uplink information.

In an embodiment, the communication module is configured to, when the downlink information includes the SS, receive the downlink information, and not transmit the uplink information.

In an embodiment, the communication module is configured to, when the downlink information includes the PDSCH scheduled by the network device, receive the downlink information, and not transmit the uplink information.

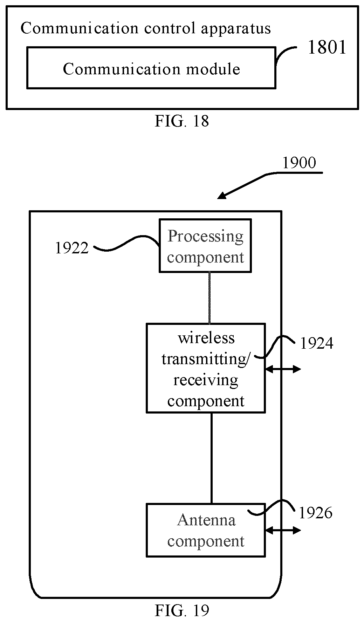

FIG. 18 is a schematic block diagram of a communication control apparatus according to an embodiment of the present disclosure. The communication control apparatus shown in this embodiment can be applied in a network device that can communicate with a terminal. The network device includes but is not limited to a base station in a communication system such as a 4G base station, a 5G base station, or a 6G base station, etc. The terminal includes but is not limited to a communication device such as a mobile phone, a tablet, a wearable device, a sensor, or an Internet of Things (IoT) device (such as NB IoT, MTC, eMTC).

In an embodiment, duplex communication can be performed between the terminal and the network device, such as full duplex communication or half duplex communication.

The Network device can configure a downlink (DL) slot for the terminal, and the frequency domain resource corresponding to the DL slot can include a frequency band, or one or more bandwidth parts (BWPs) within a frequency band. The terminal can also be configured with an uplink (UL) subband for uplink transmission in the downlink slot, such that in the frequency domain resource corresponding to the DL slot, the terminal can perform uplink transmission on the UL subband, and perform downlink receiving on a frequency domain resource outside the UL subband, thereby achieving full duplex communication.

As shown in FIG. 18, the communication control apparatus may include:
a communication module 1801, configured to, in response to a conflict between receiving of uplink information transmitted by a terminal in an uplink subband and transmission of downlink information to the terminal in a downlink slot where the uplink subband is located, receive the uplink information or transmit the downlink information according to predefined rules.

In an embodiment, the downlink information includes at least one of:
a semi-persistent scheduling physical downlink shared channel (SPS PDSCH);
a periodic and/or semi-persistent non zero power channel state information reference signal (NZP CSI RS);
a periodic and/or semi-persistent zero power channel state information reference signal (ZP CSI RS);
a control resource set (CORESET);
a search space (SS); or
a PDSCH scheduled by the network device.

In an embodiment, the communication module is configured to, when the downlink information includes the SPS PDSCH, receive the uplink information, and not transmit the downlink information.

In an embodiment, the communication module is configured to, when the downlink information includes the periodic and/or semi-persistent NZP CSI RS, receive the uplink information, and not transmit the downlink information.

In an embodiment, the communication module is configured to, when the downlink information includes the periodic and/or semi-persistent ZP CSI RS, receive the uplink information and ignore the downlink information.

In an embodiment, the communication module is configured to, when the downlink information includes the CORESET, transmit the downlink information, and not receive the uplink information.

In an embodiment, the communication module is configured to, when the downlink information includes the SS, transmit the downlink information, and not receive the uplink information.

In an embodiment, the communication module is configured to, when the downlink information includes the PDSCH scheduled by the network device, transmit the downlink information, and not receive the uplink information.

With regard to the device in the above examples, the specific manner in which the respective modules perform the operations has been described in detail in the examples of the related methods, and will not be explained in detail herein.

Since the device embodiments basically corresponds to the method embodiments, the relevant parts can refer to the partial description of the method embodiments. The device examples described above are merely illustrative, where the modules described as separate members may be or not be physically separated, and the members displayed as modules may be or not be physical units, i.e., may be located in one place, or may be distributed in a plurality of network modules. Part or all of the modules may be selected according to actual requirements to implement the objectives of the solutions in the examples. A person skilled in the art can understand and implement without creative work.

The embodiments of the present disclosure further provide a communication device, including: one or more processors; and one or more memories for storing a computer program; where when the computer program is executed by the one or more processors, the communication control method performed by a terminal according to any one of embodiments mentioned above is implemented.

The embodiments of the present disclosure further provide a communication device, including: one or more processors; and one or more memories for storing a computer program; where when the computer program is executed by the one or more processors, the communication control method performed by a network device according to any one of embodiments mentioned above is implemented.

The embodiments of the present disclosure further provide a computer-readable storage medium for storing a computer program is provided, where when the computer program is executed by one or more processors, the communication control method performed by a terminal according to any one of embodiments mentioned above is implemented.

The embodiments of the present disclosure further provide a computer-readable storage medium for storing a computer program is provided, where when the computer program is executed by one or more processors, the communication control method performed by a network device according to any one of embodiments mentioned above is implemented.

As shown in FIG. 19, FIG. 19 is a schematic block diagram of a device 1900 for communication control according to an embodiment of the present disclosure. The device 1900 may be provided as a base station. Referring to FIG. 19, the device 1900 includes a processing component 1922, a wireless transmitting/receiving component 1924, an antenna component 1926, and a signaling processing portion specific to a wireless interface. The processing component 1922 may further include one or more processors. One of the processors in the processing component 1922 can be configured to implement the communication control method performed by the network device according to any one of the above embodiments.

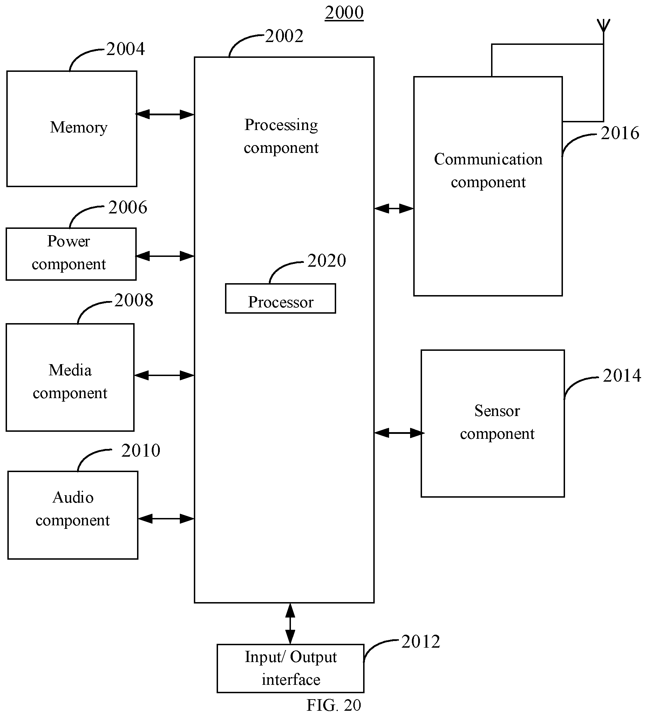

FIG. 20 is a schematic block diagram of a device 2000 for communication control according to an embodiment of the present disclosure. For example, device 2000 can be a mobile phone, a computer, a digital broadcast terminal, a message transmitting and receiving device, a gaming console, a tablet device, a medical device, a fitness device, a personal digital assistant, and the like.

Referring to FIG. 20, device 2000 can include one or more of the following components: processing component 2002, memory 2004, power component 2006, multimedia component 2008, audio component 2010, input/output (I/O) interface 2012, sensor component 2014, or a communication component 2016.

The processing component 2002 generally controls the overall operations of the electronic device 2000, such as operations associated with display, calling, data communication, camera operation and recording operation. The processing assembly 2002 may include one or more processors 2020 to execute instructions to complete all or a part of the blocks of the communication control method performed by the terminal. Further, the processing component 2002 may include one or more modules to facilitate interaction between the processing component 2002 and another component. For example, the processing component 2002 may include a multimedia module to facilitate the interaction between the multimedia component 2008 and the processing component 2002.

The memory 2004 is configured to store different types of data to support the operations of the electronic device 2000. Examples of such data include instructions of any application program or method operable on the electronic device 2000, contact data, telephone directory data, messages, pictures, videos, and the like. The memory 2004 may be implemented by any type of volatile or nonvolatile storage devices or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, a disk or a CD.

The power supply component 2006 provides power for different components of the electronic device 2000. The power supply component 2006 may include a power management system, one or more power sources, and other components associated with generating, managing and distributing power for the electronic device 2000.

The multimedia component 2008 may include a screen for providing an output interface between the electronic device 2000 and a user. In some examples, the screen may include a Liquid Crystal Display (LCD) and a Touch Panel (TP). If the screen includes a touch panel, the screen may be implemented as a touch screen for receiving an input signaling from a user. The touch panel may include one or more touch sensors for sensing a touch, a slide and a gesture on the touch panel. The touch sensor may not only sense a boundary of a touching or sliding movement, but also detect duration and pressure related to the touching or sliding operation. In some examples, the multimedia component 2008 may include a front camera and/or a rear camera. When the device 2000 is in an operation mode, such as a shooting mode or a video mode, the front camera and/or the rear camera can receive external multimedia data. Each of the front camera and the rear camera may be a fixed optical lens system or be of a focal length and a capability of an optical zoom.

The audio component 2010 is configured to output and/or input an audio signaling. For example, the audio component 2010 may include a microphone (MIC). When the electronic device 2000 is in an operating mode, such as a call mode, a recording mode and a speech recognition mode, the microphone is configured to receive an external audio signal. The received audio signaling may be further stored in the memory 2004 or transmitted via the communication component 2016. In some examples, the audio component 2010 also includes a loudspeaker for outputting an audio signaling.

The I/O interface 2012 provides an interface between the processing component 2002 and a peripheral interface module which may be a keyboard, a click wheel, a button, or the like. These buttons may include but not limited to, a home button, a volume button, a start button and a lock button.

The sensor component 2014 may include one or more sensors for providing state assessments in different aspects for the electronic device 2000. For example, sensor component 2014 can detect an open/closed state of device 2000, a relative positioning of components, such as the display and keypad of device 2000, and sensor component 2014 can also detect a change in position of device 2000 or a component of device 2000, the presence or absence of user contact with device 2000, orientation or acceleration/deceleration of device 2000, and temperature change of device 2000. The sensor component 2014 may include a proximity sensor for detecting the existence of a nearby object without any physical touch. The sensor component 2014 may also include an optical sensor, such as a CMOS or CCD image sensor used in an imaging application. In some examples, the sensor component 2014 may also include an acceleration sensor, a gyro sensor, a magnetic sensor, a pressure sensor, or a temperature sensor.

The communication component 2016 is configured to facilitate wired or wireless communication between the electronic device 2000 and other devices. The device 2000 may access a wireless network according to a communication standard, such as WiFi, 2G, 3G, 4G LTE, 5G NR, or a combination thereof. In some embodiments, the communication component 2016 may receive a broadcast signaling or broadcast-related information from an external broadcast management system via a broadcast channel. In an example, the communication component 2016 may also include a Near Field Communication (NFC) module to facilitate short-range communications. For example, the NFC module may be implemented according to a Radio Frequency Identification (RFID) technology, an Infrared Data Association (IrDA) technology, an Ultra Wideband (UWB) technology, a Bluetooth^{®} (BT) technology and other technologies.

In an example, the apparatus 2000 may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, microcontrollers, microprocessors, or other electronic components for performing the communication control method performed by the network device described above.

In an example, a non-transitory computer readable storage medium including instructions, such as the memory 2004 including instructions, is also provided. The above instructions may be executed by the processor 2020 of the apparatus 2000 to complete the communication control method performed by the network device. For example, the non-transitory computer-readable storage medium may be a ROM, a RAM, a CD-ROM, a magnetic tape, a floppy disc, an optical data storage device, and the like.

After considering and practicing the disclosure of the specification, other embodiments of the present disclosure will be readily apparent to those skilled in the art. The present disclosure is intended to cover any modification, use or adaptation of the present disclosure. These modifications, uses or adaptations follow the general principles of the present disclosure and include common knowledge and conventional technical means in the technical field that are not disclosed in the present disclosure. The specification and embodiments herein are intended to be illustrative only and the real scope and spirit of the present disclosure are indicated by the following claims of the present disclosure.

It is to be understood that the present disclosure is not limited to the precise structures described above and shown in the accompanying drawings and may be modified or changed without departing from the scope of the present disclosure. The scope of protection of the present disclosure is limited only by the appended claims.

It is to be noted that the relational terms such as "first" and "second" used herein are merely intended to distinguish one entity or operation from another entity or operation rather than to require or imply any such actual relation or order existing between these entities or operations. The term "including", "containing" or any variation thereof is intended to encompass non-exclusive inclusion, so that a process, method, article or device including a series of elements includes not only those elements but also other elements not listed explicitly or those elements inherent to such a process, method, article or device. Without further limitation, the element defined by the statement "including a ......" do not preclude the existence of additional identical elements in the process, method, article, or device that include the element.

The above provides a detailed introduction to the methods and apparatuses provided in the embodiments of the present disclosure. Specific examples are applied in the present disclosure to explain the principles and embodiments of the present disclosure. The explanations of the above embodiments are only used to help understand the methods and core ideas of the present disclosure. Meanwhile, for those skilled in the art, based on the idea of the present disclosure, there will be changes in the embodiments and application scopes. In summary, the content of the specification should not be construed as limiting the present disclosure.

## Claims

1. A communication control method, performed by a terminal, comprising:
in response to a conflict between transmission of uplink information to a network device in an uplink subband and receiving of downlink information transmitted by the network device in a downlink slot where the uplink subband is located, transmitting the uplink information or receiving the downlink information according to predefined rules.

2. The method according to claim 1, wherein the downlink information comprises at least one of:
a semi-persistent scheduling physical downlink shared channel (SPS PDSCH);
a periodic and/or semi-persistent non zero power channel state information reference signal (NZP CSI RS);
a periodic and/or semi-persistent zero power channel state information reference signal (ZP CSI RS);
a control resource set (CORESET);
a search space (SS); or
a PDSCH scheduled by the network device.

3. The method according to claim 2, wherein transmitting the uplink information or receiving the downlink information according to the predefined rules comprises:
when the downlink information comprises the SPS PDSCH, transmitting the uplink information, and not receiving the downlink information.

4. The method according to claim 2, wherein transmitting the uplink information or receiving the downlink information according to the predefined rules comprises:
when the downlink information comprises the periodic and/or semi-persistent NZP CSI RS, transmitting the uplink information, and not receiving the downlink information.

5. The method according to claim 2, wherein transmitting the uplink information or receiving the downlink information according to the predefined rules comprises:
when the downlink information comprises the periodic and/or semi-persistent ZP CSI RS, transmitting the uplink information and ignoring the downlink information.

6. The method according to claim 2, wherein transmitting the uplink information or receiving the downlink information according to the predefined rules comprises:
when the downlink information comprises the CORESET, receiving the downlink information, and not transmitting the uplink information.

7. The method according to claim 2, wherein transmitting the uplink information or receiving the downlink information according to the predefined rules comprises:
when the downlink information comprises a common search space (CSS), receiving the downlink information, and not transmitting the uplink information.

8. The method according to claim 2, wherein transmitting the uplink information or receiving the downlink information according to the predefined rules comprises:
when the downlink information comprises a user equipment specific search space (USS), not receiving the downlink information, and transmitting the uplink information.

9. The method according to claim 2, wherein transmitting the uplink information or receiving the downlink information according to the predefined rules comprises:
when the downlink information comprises the PDSCH scheduled by the network device, receiving the downlink information, and not transmitting the uplink information.

10. A communication control method, performed by a network device, comprising:
in response to a conflict between receiving of uplink information transmitted by a terminal in an uplink subband and transmission of downlink information to the terminal in a downlink slot where the uplink subband is located, receiving the uplink information or transmitting the downlink information according to predefined rules.

11. The method according to claim 10, wherein the downlink information comprises at least one of:
a semi-persistent scheduling physical downlink shared channel (SPS PDSCH);
a periodic and/or semi-persistent non zero power channel state information reference signal (NZP CSI RS);
a periodic and/or semi-persistent zero power channel state information reference signal (ZP CSI RS);
a control resource set (CORESET);
a search space (SS); or
a PDSCH scheduled by the network device.

12. The method according to claim 11, wherein receiving the uplink information or transmitting the downlink information according to the predefined rules comprises:
when the downlink information comprises the SPS PDSCH, receiving the uplink information, and not transmitting the downlink information.

13. The method according to claim 11, wherein transmitting the uplink information or receiving the downlink information according to the predefined rules comprises:
when the downlink information comprises the periodic and/or semi-persistent NZP CSI RS, receiving the uplink information, and not transmitting the downlink information.

14. The method according to claim 11, wherein transmitting the uplink information or receiving the downlink information according to the predefined rules comprises:
when the downlink information comprises the periodic and/or semi-persistent ZP CSI RS, receiving the uplink information and ignoring the downlink information.

15. The method according to claim 11, wherein transmitting the uplink information or receiving the downlink information according to the predefined rules comprises:
when the downlink information comprises the CORESET, transmitting the downlink information, and not receiving the uplink information.

16. The method according to claim 11, wherein transmitting the uplink information or receiving the downlink information according to the predefined rules comprises:
when the downlink information comprises a common search space (CSS), transmitting the downlink information, and not receiving the uplink information.

17. The method according to claim 11, wherein transmitting the uplink information or receiving the downlink information according to the predefined rules comprises:
when the downlink information comprises a user equipment specific search space (USS), not transmitting the downlink information, and receiving the uplink information.

18. The method according to claim 11, wherein transmitting the uplink information or receiving the downlink information according to the predefined rules comprises:
when the downlink information comprises the PDSCH scheduled by the network device, transmitting the downlink information, and not receiving the uplink information.

19. A communication control apparatus, applied in a terminal, comprising:
a communication module, configured to, in response to a conflict between transmission of uplink information to a network device in an uplink subband and receiving of downlink information transmitted by the network device in a downlink slot where the uplink subband is located, transmit the uplink information or receive the downlink information according to predefined rules.

20. A communication control apparatus, applied in a network device, comprising:
a communication module, configured to, in response to a conflict between receiving of uplink information transmitted by a terminal in an uplink subband and transmission of downlink information to the terminal in a downlink slot where the uplink subband is located, receive the uplink information or transmit the downlink information according to predefined rules.

21. A communication device, comprising:
one or more processors; and
one or more memories for storing a computer program;
wherein when the computer program is executed by the one or more processors, the communication control method according to any one of claims 1 to 8 is implemented.

22. A communication device, comprising:
one or more processors; and
one or more memories for storing a computer program;
wherein when the computer program is executed by the one or more processors, the communication control method according to any one of claims 9 to 16 is implemented.

23. A computer-readable storage medium for storing a computer program, wherein when the computer program is executed by one or more processors, the communication control method according to any one of claims 1 to 9 is implemented.

24. A computer-readable storage medium for storing a computer program, wherein when the computer program is executed by one or more processors, the communication control method according to any one of claims 10 to 18 is implemented.
